# EUROPÄISCHE PATENTSCHRIFT

(11) **EP 2 311 887 B1**
(45) Veröffentlichungstag und Bekanntmachung des Hinweises auf die Patenterteilung: **19.12.2012**
(21) Anmeldenummer: 10194978.2
(22) Anmeldetag: 17.09.2007
(51) Int. Cl.: C08F 4/00, C08F 4/06, C08F 4/10

(54) **Verfahren zur Copolymerisation von Trioxan**
Process for the copolymerisation of trioxane
Procédé pour la copolymérisation du trioxane

(30) Priorität: 21.09.2006 DE 102006044465
(43) Veröffentlichungstag der Anmeldung: 20.04.2011
(62) Teilanmeldung aus: 07818182.3
(73) Patentinhaber: Ticona GmbH, 65451 Kelsterbach (DE)
(72) Erfinder: Hoffmockel, Michael, 65527 Niedernhausen (DE); Roeschert, Horst, 55437 Ober-Hilbersheim (DE); Haubs, Michael, 55545 Bad Kreuznach (DE)
(74) Vertreter: Zimmermann & Partner

(56) Entgegenhaltungen:
- US-A- 3 842 019

## Beschreibung

Die vorliegende Erfindung betrifft ein Verfahren zur kationischen Polymerisation von Monomeren in Gegenwart eines Initiators.

Die kationische Polymerisation ist eine ionische Polymerisation, die über eine schrittweise Reaktion von Monomermolekülen an positiv geladene aktive Zentren abläuft. Nach dieser Methode lassen sich eine Reihe von Monomeren polymerisieren. Beispiele dafür sind Olefine, Vinylether, Vinylarene wie Styrol, vor allem aber Verbindungen mit Heteroatomen wie Ether, Thioether, Oxirane, Oxazoline, Ester und Acetale. Bekannte Initiatoren für die kationische Polymerisation sind Protonensäuren wie Perchlorsäure oder Trifluormethansulfonsäure oder Lewis-Säuren wie Bortrifluorid oder Aluminiumtrichlorid.

Besondere Bedeutung hat die kationische Polymerisation bei der Herstellung von Polyacetalen erlangt, die durch Polymerisation von Aldehyden über die Öffnung der Carbonyl Doppelbindung oder durch Ringöffnung von cyclischen Acetalen wie Trioxan, großtechnisch zumeist in Massepolymerisation hergestellt werden.

Die bekannten Initiatoren für die kationische Polymerisation sind aber in aller Regel mit bestimmten Nachteilen belastet. Bortrifluorid wird typischerweise als Gas unter hohem Druck gelagert und lässt sich nur schwer handhaben. Auch die Qualität von damit hergestellten Polyacetalen, insbesondere deren Langzeitstabilität, kann noch verbessert werden.

Die DE 2141600 beschreibt ein Verfahren zur Homo- und Copolymerisation von Trioxan in Gegenwart von Trifluormethansulfonsäure und ihren Homologen mit 1 - 18 C-Atomen als Initiator.

Die EP 0 678 535 beschreibt die Herstellung von Polyoxymethylen-Copolymeren mittels kationischer Polymerisation **unter Verwendung** von Trifluormethansulfonsäure oder dazu homologen Säuren und Anhydriden als Initiatoren. Der Initiator wird in einem Konzentrationsbereich von 5*10⁻⁶ bis 2*10⁻⁵ mol-%, bezogen auf das Hauptmonomere, eingesetzt. Die Initiatoren des zitierten Standes der Technik sind außerordentlich aktiv, besitzen aber gerade deshalb den Nachteil, dass schon geringe Dosierungsschwankungen zu unerwünschten Druckschwankungen im Polymerisationsreaktor führen können. Außerdem reagieren diese aktiven Initiatoren sehr empfindlich auf schon geringe Mengen an Verunreinigungen im Monomer, was **sich direkt auf** die Prozessstabilität auswirkt. So kommt es, dass diese Initiatoren trotz ihrer hohen Aktivität industriell zur Zeit nicht eingesetzt werden, da sie den Anforderungen der technischen Produktion bezüglich Zuverlässigkeit und Produktionskonstanz nicht genügen.

Das Dokument US3842019 offenbart Salze von Protonensäuren wie Trifluormethansulfonsäure als Initiatoren für die kationische Polymerisation von Monomeren. Diese Salze können Alkali- oder Erdalkalisalze, aber auch Ammoniumsalze sein. Trioxan kann zum Beispiel in Gegenwart eines solches Initiators polymerisiert werden. Die Polymerisation wird Beispielweise um 300°F (148°C) mit 1 Gew.-% (Beispiel 5) Trifluormethansulfonsäuresalz durchgeführt.

Aufgabe der vorliegenden Erfindung war es deshalb, ein neues Verfahren für die kationische Polymerisation von Trioxan zu finden, der einerseits sehr aktiv ist und zu qualitativ hochwertigen Polymeren führt, andererseits aber die hohen Anforderungen der technischen Produktion bezüglich Zuverlässigkeit und Produktionskonstanz erfüllt.

Darüber hinaus soll das Verfahren an die jeweiligen Bedürfnisse im Produktionsbetrieb angepasst werden können.

Gelöst wird diese Aufgabe erfindungsgemäß durch ein Verfahren nach Anspruch 1.

Unter einer Protonensäure ist erfindungsgemäß eine Verbindung zu verstehen, die gegenüber einem Monomeren als Protonendonator wirkt. Erfindungsgemäß besonders als Initiator geeignete Protonensäuren sind anorganische Säuren wie Schwefelsäure, Tetrafluorborsäure oder Perchlorsäure, aber auch organische Säuren wie fluorierte oder chlorierte Alkyl- oder Arylsulfonsäuren. Weitere Beispiele umfassen Homologe der Trifluormethansulfonsäure wie **Pentafluorethansulfonsäure**, **Heptafluorpropansulfonsäure**, Nonafluorbutansulfonsäure sowie Perfluorpentan-, -hexan- und -heptansulfonsäure.

Die Kationen der erfindungsgemäßen Salze können sowohl anorganischer als auch organischer Natur sein. Als anorganische Kationen kommen besonders die Alkali- oder Erdalkalimetallionen in Frage. Lithiumsalze sind wegen ihrer guten Löslichkeit in vielen Monomeren besonders bevorzugt. Beispiele von Protonensäure-Salzen mit anorganischen Kationen sind Lithiumtrifluorsulfonat oder Natriumtrifluorsulfonat.

Als organische Kationen kommen besonders Ammoniumionen in Frage, wie z.B. Triethylammonium oder quartäre Ammoniumionen wie Tetramethylammonium, Triethylmethylammonium oder Tetraethylammonium. So kann z. B. Tetraethylammoniumperchlorat als Protonensäure-Salz verwendet werden. Bevorzugt sind Kationen, die eine gute Löslichkeit des Salzes in der Protonensäure und im Monomeren begünstigen.

Besonders bevorzugt sind substituierte Ammoniumionen mit der allgemeinen Formel (I), 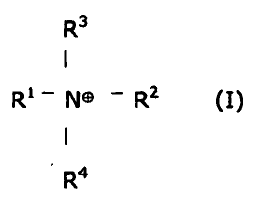 wobei R¹ - R⁴ unabhängig voneinander Wasserstoff, eine Alkylgruppe wie Methyl, Ethyl, n-Propyl, iso-Propyl, n-Butyl, iso-Butyl oder eine Arylgruppe wie Phenyl oder 4-Methoxyphenyl bedeuten.

Substituierte Ammoniumionen sind auch deshalb bevorzugt, da sich die entsprechenden Salze sehr einfach durch Mischen der Protonensäure mit dem entsprechenden Amin herstellen lassen. So entsteht aus Triethylamin und Trifluormethansulfonsäure das Triethylammoniumtriflat.

Als organische Kationen können auch protonierte stickstoffhaltige Verbindungen verwendet werden, wie z.B. protoniertes Imidazol oder protonierte Amide. Als Amide können z. B. Dimethylformamid, Dimethylacetamid oder N-Methylpyrrolidon verwendet werden.

Die Anionen der Salze werden so gewählt, dass sie eine geringe Nukleophilie und eine gute thermische Stabilität besitzen. Beispiele sind Perchlorat, Tetrafluoroborat, Tetraphenylborat, Hexafluorophoshat und das bevorzugte Trifluormethansulfonat.

Das molare Verhältnis von Protonensäure zu Salz kann erfindungsgemäß in einem breiten Fenster variiert werden. Darin ist gerade der besondere und überraschende Vorteil des neuen Initiators zu sehen. Prinzipiell sind molare Verhältnisse von Protonensäure zu Salz im Bereich von 1 : 0,01 bis 1 : 2000 möglich, vorzugsweise im Bereich von 1 : 0,5 bis 1 : 10, besonders bevorzugt im Bereich von 1 : 0,8 bis 1 : 8, ganz besonders bevorzugt von 1 : 1 bis 1 : 4.

Die Menge an Initiator, die erfindungsgemäß eingesetzt wird, liegt im Bereich von 10⁻⁶ Gew.-% bis 1 Gew.-%, bevorzugt im Bereich von 10⁻⁵ Gew.-% bis 10⁻³ Gew.-% und besonders bevorzugt im Bereich von 2*10⁻⁵ Gew.-% bis 5*10⁻⁴ Gew.-%, bezogen auf das Gesamtgewicht an eingesetzten Monomeren. Die Menge an eingesetztem Initiator hängt von der chemischen Zusammensetzung der Protonensäure und der chemischen Zusammensetzung der Monomeren bzw. der Monomermischung ab.

Der erfindungsgemäße Initiator lässt sich besonders für die Copolymerisation von 1,3,5-Trioxan (Trioxan) anwenden. Als Comonomere können die mit Trioxan copolymerisierbaren Comonomeren eingesetzt werden, deren Mengenanteil im Monomerengemisch im Bereich von 0,1 bis 25 Gew.-% liegt, vorzugsweise im Bereich von 0,5 bis 10 Gew.-%, jeweils bezogen auf das Gewicht der Gesamtmischung.

Als geeignete Comonomere sind cyclische Acetale mit mindestens 2 benachbarten C-Atomen und 3 bis 9 Ringgliedern. Beispiele dafür sind Ethylenoxid, Propylenoxid, Trimethylenoxid, Tetrahydrofuran, Butadienoxid, 1,3-Dioxolan, 1,4-Butandiolformal, Diethylenglykolformal, o-Xylenglykolformal, Thiodiglykolformal oder 1,3-Oxthiolan oder Gemische von diesen.

Die Molmasse der mit dem erfindungsgemäßen Initiator hergestellten Homo - oder Copolymeren wird ggf. durch übliche Regler auf die angestrebten Werte eingestellt. Als Regler kommen normalerweise Acetale oder Formale einwertiger Alkohole zum Einsatz. Besonders bevorzugt ist Methylal.

Der erfindungsgemäße Initiator wird in verdünnter Form eingesetzt Beim Einsatz in verdünnter Form wird der Initiator in einem Lösungsmittel gelöst. Die Konzentration des Initiators im Lösungsmittel liegt im Bereich von 10⁻⁴ Gew.-% bis 10 Gew.-%, bevorzugt im Bereich von 10⁻³ Gew.-% bis 0,2 Gew.-% und besonders bevorzugt im Bereich von 10⁻² Gew.-% bis 0,1 Gew.-%. Als Lösemittel für den Initiator eignen sich inerte organische Lösemittel. wie aliphatische oder cycloaliphatische Ether mit 4 bis 10 C-Atomen, halogenierte Kohlenwasserstoffe, Glykolether, Methylformiat oder ähnliche. Besonders bevorzugt als Lösungsmittel ist Methylal oder 1,3-Dioxolan.

Erfindungsgemäß wird der Initiator so zubereitet, dass Protonensäure und Salz in dem Lösungsmittel gelöst werden und diese Lösung zum Starten der Polymerisation verwendet wird.

Ein weiterer Vorteil des erfindungsgemäßen Initiators liegt darin, dass seine Aktivität im Vergleich zu Initiator aus reiner Protonensäure (ohne Salzzusatz) weniger stark von Verunreinigungen in der Monomermischung beeinflusst wird.

Es war besonders überrasche n d , **dass sich** die Reaktivität des erfindungsgemäßen Initiators durch das Verhältnis von Protonensäure zu Salz für die kationische Polymerisation über einen sehr weiten Bereich genau einstellen lässt. Dadurch ist es möglich, den zeitlichen Verlauf der Polymerisation durch die chemische Zusammensetzung des Initiators exakt auf einen vorliegenden Polymerisationsreaktor anzupassen.

Die Erfindung bezieht sich auf ein Verfahren zur kationischen Copolymerisation von Trioxan nach Anspruch 1 in Gegenwart eines Initiators, der neben einer Protonensäure zusätzlich auch ein Salz einer Protonensäure enthält. Die Polymerisation wird vorzugsweise bei einer Temperatur im Bereich von 60 bis 180 °C und unter einem Druck im Bereich von 1 bis 100 bar, vorzugsweise von 2 bis 60 bar, durchgeführt.

Das zuvor beschriebene Verfahren zur Copolymerisation von Trioxan wird mit Comonomeren eingesetzt, wobei die Comonomeren in der Ausgangsmischung in einer Menge im Bereich von 0,1 bis 25 Gew.-%, vorzugsweise im Bereich von 0,5 bis 10 Gew.-%, bezogen auf das Gesamtgewicht der Ausgangsmischung vorliegen.

Die Erfindung soll im Folgenden durch Ausführungsbeispiele näher beschrieben werden, ohne auf die konkret dargestellten Ausführungsformen der Initiatoren und der kationischen Polymerisation beschränkt zu sein.

### Beispiel 1.

Herstellung der Initiatorlösungen 1 bis 4:
In einer Lösung von Trifluormethansulfonsäure ("Triflic") in Methylal werden verschiedene Menden an Triethylammoniumtriflat ("Triflat"), wie in Tabelle 1 angegeben, unter Rühren gelöst.

**Tabelle 1.**

| Initiatorlösung Nr. | 1 | 2 | 3 | 4 |
|---|---|---|---|---|
| Triflic (mg) | 80 | 80 | 80 | 80 |
| Triflat (mg) | 0 | 135 | 270 | 540 |
| Methylal (kg) | 1 | 1 | 1 | 1 |

### Ref. Beispiele 2 - 5.

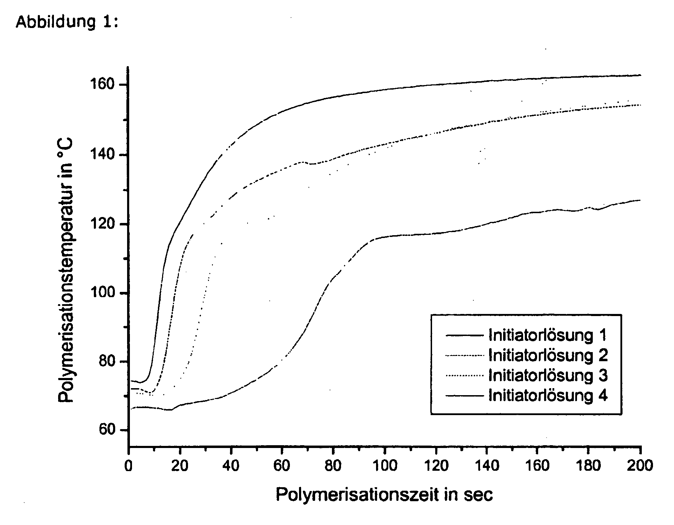

In vier verschiedenen Experimenten werden zu jeweils 100 g Trioxan jeweils 100 Mikroliter der in Beispiel 1 hergestellten Initiatorlösungen (1 - 4) unter Rühren gegeben und so kationisch polymerisiert. Der Temperaturverlauf der Reaktionsmischungen über die Zeit wird mit einem Thermoelement gemessen und aufgezeichnet. Die gemessenen Kurven sind in Abbildung 1 wiedergegeben. Zum Zeitpunkt t = 0 sec wurde die Initiatorlösung zugegeben.

Aus dem Kurvenverlauf lässt sich die Induktionszeit und die Temperaturanstiegsgeschwindigkeit dT/dt, die proportional zur Polymerisationsgeschwindigkeit ist, ablesen. Die Ergebnisse sind in Tabelle 2 wiedergegeben:

**Tabelle 2.**

| Initiatorlösung Nr. | Induktionszeit | Temperaturanstiegs-Geschwindigkeit bei 90°C |
|---|---|---|
| 1 | 7 sec | 6.1°C /sec |
| 2 | 14 sec | 4.8 °C/sec |
| 3 | 22 sec | 3.2 °C/sec |
| 4 | 53 sec | 1.4 °C/sec |

Aus den durchgeführten Ausführungsbeispielen wird deutlich, wie mit zunehmendem Verhältnis von Salz zu Protonensäure bei gleicher Protonensäurekonzentration eine zunehmende Verlangsamung der Polymerisation stattfindet.

Die Schmelzindices der Polymeren aus Beispielen 2-5 waren innerhalb der Fehlergrenze identisch und lagen bei 4,5 ml/10 min (DIN ISO 1133; 190°C bei 5 kg Auflagegewicht).
- Punkt 1.: Initiator für die Polymerisation von Monomeren, welche der kationischen Polymerisation zugänglich sind, dadurch gekennzeichnet, dass der Initiator mindestens eine Protonensäure und mindestens ein Salz einer Protonensäure enthält.
- Punk 2.: Initiator nach Punkt 1, dadurch gekennzeichnet, dass er als Protonensäure anorganische Säuren wie Schwefelsäure, Tetrafluoroborsäure oder Perchlorsäure und/oder organische Sulfonsäuren wie fluorierte oder chlorierte Alkyl- oder Arylsulfonsäuren enthält.
- Punkt 3.: Initiator nach Punkt 2, dadurch gekennzeichnet, dass die organische Sulfonsäure ausgewählt wird aus der Gruppe der folgenden Verbindungen: Trifluormethansulfonsäure, Pentafluorethansulfonsäure, Heptafluorpropansulfonsäure, Nonafluorbutansulfonsäure oder Perfluorpentan-, -hexan- oder - heptansulfonsäure.
- Punkt 4.: Initiator nach einem oder mehreren der Punkte 1 bis 3, dadurch gekennzeichnet, dass er als Salz die Alkali- oder Erdalkalisalze von Protonensäuren und/oder substituierte Ammoniumsalze von Protonensäuren enthält, wobei die Kationen der Ammoniumsalze die allgemeinen Formel (I) haben 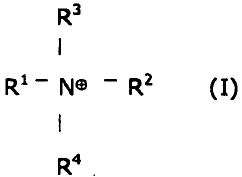 und wobei R¹ - R⁴ unabhängig voneinander Wasserstoff, eine Alkylgruppe wie Methyl, Ethyl, n-Propyl, iso-Propyl, n-Butyl, iso-Butyl oder eine Arylgruppe wie Phenyl oder 4-Methoxyphenyl bedeuten. Punkt 5. Initiator nach einem oder mehreren der Punkte 1 bis 4, dadurch gekennzeichnet, dass das molare Verhältnis von Protonensäure zu Salz im Bereich von 1 : 0,01 bis 1 : 2.000 liegt, vorzugsweise im Bereich von 1 : 0,5 bis 1 : 10, besonders bevorzugt im Bereich von 1 : 0,8 bis 1 : 8, ganz besonders bevorzugt von 1 : 1 bis 1 : 4.
- Punkt 6.: Initiator nach einem oder mehreren der Punkte 1 bis 5, dadurch gekennzeichnet, dass er in einer Menge von 10⁻⁶ Gew.-% bis 1 Gew.-%, bezogen auf das Gesamtgewicht an eingesetzten Monomeren, eingesetzt wird.
- Punkt 7.: Verfahren zur kationischen Polymerisation oder Copolymerisation von Monomeren in Gegenwart eines Initiators nach einem der Punkte 1 bis 6, wobei die Polymerisation bei einer Temperatur im Bereich von 60 bis 180 °C und unter einem Druck im Bereich von 1 bis 100 bar, vorzugsweise von 2 bis 60 bar, durchgeführt wird.
- Punkt 8.: Verfahren nach Punkt 7, wobei als Haupt-Monomeres Trioxan und Comonomere in einer Menge im Bereich von 0,1 bis 25 Gew.-%, vorzugsweise im Bereich von 0,5 bis 10 Gew.-%, bezogen auf das Gewicht der Gesamtmischung, eingesetzt werden.
- Punkt 9.: Verwendung eines Initiators nach einem oder mehreren der Punkte 1 - 6 zur kationischen Polymerisation oder Copolymerisation von Monomeren.

## Patentansprüche

1. Verfahren zur kationischen Polymerisation oder Copolymerisation von Monomeren in Gegenwart eines Initiators umfassend:
i) Einsetzen von Trioxan als Haupt-Monomer und Comonomere in einer Menge Im Bereich von 0,1 bis 25 Gew.-%, bezogen auf das Gewicht der Gesamtmischung, und wobei das Comonomer ausgewählt ist aus der Gruppe umfassend cyclische Acetale mit mindestens 2 benachbarten C-Atomen und 3 bis 9 Ringgliedern,
ii) Bereitstellen einer Initiatoriösung durch Lösen mindestens einer Protonensäure und mindestens einem Salz einer Protonensäure in einem Lösungsmittel, wobei das molare Verhältnis von Protonensäure zu Salz im Bereich von 1:0,01 bis 1:2000 liegt,
iii) Verwenden der Initiatorlösung zum Starten der Polymerisation, wobei die Polymerisation bei einer Temperatur von 60°C bis 180°C und unter einem Druck im Bereich von 1 bis 100 bar durchgeführt wird.

2. Verfahren gemäß Anspruch 1, wobei der Initiator als Protonensäure anorganische Säuren und/oder organische Sulfonsäuren enthält.

3. Verfahren gemäß Anspruch 2, **dadurch gekennzeichnet, dass** die organische Sulfonsäure ausgewählt wird aus der Gruppe der folgenden Verbindungen: Trifluormethansulfonsäure, Pentatluorethansulfonsäure, Heptafluorpropansulfonsäure, Nonafluorbutansulfonsäure, Perfluorpentansulfonsäure, Perfluorhexansulfonsäure und Perfluorheptansulfonsäure.

4. Verfahren gemäß Anspruch 2, wobei die organische Säure eine fluorierte oder chlonierte Alkyl oder Anylsulfonsäure ist.

5. Verfahren gemäß Anspruch 2, wobei die anorganische Säure ausgewählt ist aus der Gruppe bestehend aus Tetrafluorborsäure und Perchlorsäure.

6. Verfahren gemäß einem oder mehreren der Ansprüche 1 bis 5, wobei der Initiator als Salz die Alkali- oder Erdalkalisalze von Protonensäuren und/oder substituierte Ammoniumsalze von Protonensäuren enthält, wobei die Kationen der Ammoniumsalze die allgemeine Formel (I) aufweisen 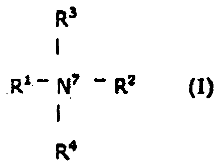 und wobei R¹ - R⁴ unabhängig voneinander Wasserstoff, eine Alkylgruppe wie Methyl, Ethyl, n-Propyl, iso-Propyl, n-Butyl, iso-Butyl oder eine Arylgruppe wie Phenyl oder 4-Methoxyphenyl bedeuten.

7. Verfahren gemäß einem oder mehreren der Ansprüche 1 bis 6, wobei der Initiator in einer Menge von 10⁻⁶ Gew.-% bis 1 Gew.-%, bezogen auf das Gesamtgewicht an eingesetzten Monomeren, eingesetzt wird.

8. Verfahren gemäß mindestens einem der Ansprüche 1 bis 7, wobei das molare Verhältnis von Protonensäure zu Protonensäuresalz 1 : 0,5 bis 1 : 10 ist.

## Claims

1. A method for cationically polymerizing or copolymerizing monomers in the presence of an initiator, comprising:
i) employing trioxane as a main monomer, and co-monomers in an amount in a range from 0.1 to 25 % by weight relative to the weight of the total mixture, and with the co-monomer being selected from the group comprising cyclic acetals having at least 2 neighboring C atoms and 3 to 9 ring members,
ii) providing an initiator solution by dissolving at least one protonic acid and at least one salt of a protonic acid in a solvent, wherein the molar ratio of protonic acid to salt is in a range from 1:0.01 to 1:2000,
iii) using the initiator solution to start the polymerization, wherein the polymerization is conducted at a temperature of 60°C to 180°C and under a pressure in the range from 1 to 100 bar.

2. The method according to claim 1, wherein the initiator being protonic acid contains inorganic acids and/or organic sulfonic acids.

3. The method according to claim 2, **characterized in that** the organic sulfonic acid is selected from the group of the following compounds:
trifluoromethane sulfonic acid, pentafluoromethane sulfonic acid, heptafluoropropane sulfonic acid, nonafluorobutane sulfonic acid, perfluoropentane sulfonic acid, perfluorohexane sulfonic acid, and perfluoroheptane sulfonic acid.

4. The method according to claim 2, wherein the organic acid is a fluorinated or chlorinated alkyl or aryl sulfonic acid.

5. The method according to claim 2, wherein the inorganic acid is selected from the group consisting of tetrafluoroboric acid and perchloric acid.

6. The method according to one or more of claims 1 to 5, wherein the initiator being a salt contains the alkali or earth alkali salts of protonic acids and/or substituted ammonium salts of protonic acids, wherein the cations of the ammonium salts exhibit the general formula (I) 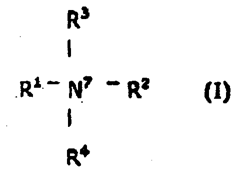 and wherein R¹ - R⁴ represent independently of each other hydrogen, an alkyl group such as methyl, ethyl, n-propyl, isopropyl, n-butyl, isobutyl or an aryl group such as phenyl or 4-methoxyphenyl.

7. The method according to one or more of claims 1 to 6, wherein the initiator is employed in an amount of 10⁻⁶ % by weight to 1 % by weight relative to the total weight of monomers used.

8. The method according to at least one of claims 1 to 7, wherein the molar ratio of protonic acid to protonic acid salt is from 1:0.5 to 1:10.

## Revendications

1. Procédé de polymérisation cationique ou de copolymérisation de monomères en présence d'un initiateur, comprenant :
i) utilisation de trioxane comme monomère principal et comonomères dans une quantité comprise entre 0,1 et 25 % en poids du mélange total, et le comonomère étant sélectionné dans le groupe comprenant des acétales cycliques comportant au moins 2 atomes de C voisins et 3 à 9 éléments cycliques,
ii) mise à disposition d'une solution d'initiateur par dissolution d'au moins un acide protonique et d'au moins un sel d'un acide protonique dans un solvant, le rapport molaire de l'acide protonique au sel étant compris entre 1:0,01 et 1:2000,
iii) utilisation de la solution d'initiateur pour démarrer la polymérisation, la polymérisation étant effectuée à une température comprise entre 60 °C et 180 °C et sous une pression comprise entre 1 et 100 bar.

2. Procédé selon la revendication 1, dans lequel l'initiateur contient, comme acide protonique, des acides anorganiques et/ou des acides sulfoniques organiques.

3. Procédé selon la revendication 2, **caractérisé en ce que** l'acide sulfonique organique est sélectionné dans le groupe des liaisons suivantes : acide triofluorométhanesulfonique, acide pentafluoroéthanesulfonique, acide heptafluoropropanesulfonique, acide nonafluorobutanesulfonique, acide perfluoropentanesulfonique, acide perfluorohexanesulfonique et acide perfluoroheptanesulfonique.

4. Procédé selon la revendication 2, dans lequel l'acide organique est un alkyle fluoré ou chloré ou un acide arylsulfonique.

5. Procédé selon la revendication 2, dans lequel l'acide anorganique est sélectionné dans le groupe constitué par l'acide tétrafluoroborique et l'acide perchlorique.

6. Procédé selon l'une ou plusieurs des revendications 1 à 5, dans lequel l'initiateur contient, comme sel, les sels alcalins ou alcalino-terreux d'acides protoniques et/ou des sels d'ammoniac substitués d'acides protoniques, dans lequel les cations des sels d'ammoniac présentent la formule générale (I) 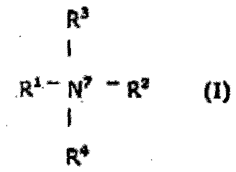 et où R¹ à R⁴ représentent indépendamment l'un de l'autre de l'hydrogène, un groupe alkyle tel que le méthyle, l'éthyle, le n-propyle, l'iso-propyle, le n-butyle, l'iso-butyle ou un groupe aryle tel que le phényle ou le 4-méthoxyphényle.

7. Procédé selon l'une ou plusieurs des revendications 1 à 6, dans lequel l'initiateur est utilisé dans une quantité comprise entre 10⁻⁶ % en poids et 1 % en poids, par rapport au poids total en monomères utilisés.

8. Procédé selon au moins l'une des revendications 1 à 7, dans lequel le rapport molaire de l'acide protonique au sel d'acide protonique est compris entre 1:0,5 et 1:10.
